# EUROPÄISCHE PATENTSCHRIFT

(11) **EP 4 638 029 B1**
(45) Veröffentlichungstag und Bekanntmachung des Hinweises auf die Patenterteilung: **22.04.2026**
(21) Anmeldenummer: 23805515.6
(22) Anmeldetag: 09.11.2023
(51) Int. Cl.: B21C 47/02, B21C 47/06, B21C 47/32, B21C 47/34

(54) **VORRICHTUNG MIT EINER HASPELEINRICHTUNG**
APPARATUS HAVING A COILING DEVICE
APPAREIL PRÉSENTANT UN DISPOSITIF DE BOBINAGE

(30) Priorität: 19.12.2022 DE 102022213901
(43) Veröffentlichungstag der Anmeldung: 29.10.2025
(73) Patentinhaber: SMS Group GmbH, 41069 Mönchengladbach (DE)
(72) Erfinder: KASTNER, Andreas, 57399 Kirchhundem (DE); LÖHR, Andreas, 57562 Herdorf (DE); HOLZHAUER, Thomas, 57399 Kirchhundem (DE); TREUDE, Magnus, 57319 Bad Berleburg (DE); FICK, Guido, 57223 Kreuztal (DE); FUCHS, Wolfgang, 57271 Hilchenbach (DE)
(74) Vertreter: Hemmerich & Kollegen
(86) Internationale Anmeldenummer: PCT/EP2023/081269
(87) Internationale Veröffentlichungsnummer: WO 2024/132288

(56) Entgegenhaltungen:
- DE-A1- 2 453 322
- US-A- 3 062 470
- US-A- 3 100 605
- US-A- 3 841 131
- US-A- 4 063 440

## Beschreibung

Die Erfindung betrifft eine Vorrichtung mit einer Haspeleinrichtung zum Aufwickeln eines Bandes, insbesondere eines Metallbandes zu einem Coil und mit einer Brücke, die sich über die Haspeleinrichtung erstreckt. Darüber hinaus betrifft die Erfindung eine Warmbandstraße mit der besagten Vorrichtung sowie ein Verfahren zum Warten der Haspeleinrichtung.

Vorrichtungen der genannten Art sind im Stand der Technik grundsätzlich bekannt, z.B. aus der japanischen Patentanmeldung JP S 55008356 A. Die dort offenbarte Vorrichtung zeigt alle Merkmale des Oberbegriffs des Patentanspruchs 1. Konkret ist aus dieser Druckschrift eine Vorrichtung bekannt mit einer Haspeleinrichtung mit einem Haspeldorn zum Aufwickeln eines Bandes, insbesondere eines Metallbandes zu einem Coil. Am Umfang des Haspeldorns sind drei Umlenkschalen verteilt angeordnet zum Führen des Bandes beim Wickeln um den Haspeldorn herum. Die Umlenkschalen werden individuell angestellt durch Anstelleinrichtungen in Form von Hydraulikzylindern. Außerdem umfasst die Vorrichtung eine Brücke in Form eines Rollgangs, die sich über der Haspeleinrichtung erstreckt. Auch die US 3 100 605 A zeigt eine Vorrichtung mit den Merkmalen des Oberbegriffs des Anspruchs 1.

Die Wartung an derartigen stationären Haspeleinrichtungen ist typischerweise aufwendig, da jeweils erhebliche Demontage- und Montagearbeiten notwendig werden können.

Der Erfindung liegt die Aufgabe zugrunde, eine bekannte Vorrichtung mit einer Haspeleinrichtung, eine bekannte Warmbandstraße mit der Vorrichtung sowie bekannte Verfahren zum Warten der Haspeleinrichtung innerhalb der Vorrichtung dahingehend weiterzubilden, dass die Wartung vereinfacht, schneller und für das Wartungspersonal sicherer durchgeführt werden kann.

Diese Aufgabe wird bezüglich der Vorrichtung durch den Gegenstand des Patentanspruchs 1 gelöst. Demnach ist die erfindungsgemäße Vorrichtung dadurch gekennzeichnet, dass mindestens eine Trageinrichtung an der Brücke und/oder an den Brückenköpfen angebracht ist zum Anhängen von Teilen der Haspeleinrichtung. Dadurch wird insbesondere die Wartung der Haspeleinrichtung wesentlich erleichtert und beschleunigt.

Im Rahmen der vorliegenden Beschreibung wird dabei zwischen beim Betrieb der Haspeleinrichtung abgenutzten Teilen, die aus der Haspeleinrichtung heraus transportiert werden müssen, und nicht-abgenutzten bzw. neuwertigen Ersatzteilen, die zum Ersatz der abgenutzten Teile in die Haspeleinrichtung hineintransportiert werden müssen, unterschieden.

Bei zumindest einem der Brückenköpfe kann es sich um einen Bestandteil einer Treibereinrichtung handeln.

Gemäß einem ersten Ausführungsbeispiel der Erfindung kann die Trageinrichtung in Form eines Hakens zum Anhängen der Teile der Haspeleinrichtung oder in Form einer vorzugsweise teleskopierbaren Tragschiene oder eines Krans, vorzugsweise jeweils mit einer Laufkatze ausgebildet sein zum Anhängen und Transportieren der Teile. Weiterhin ist der Trageinrichtung eine Hebeeinrichtung, beispielsweise in Form eines Seil- oder Flaschenzugs zugeordnet zum Anhängen, Anheben oder Absenken der Teile der Haspeleinrichtung.

Es kann mindestens eine erste Trageinrichtung vorgesehen sein, mit deren Hilfe Teile, wie die Anstelleinrichtungen zum Anstellen der Umlenkschalen, aus der Haspeleinrichtung heraustransportiert werden können, wenn sie abgenutzt sind, oder als neuwertige Ersatzteile in die Haspeleinrichtung hineintransportiert werden können.

Neben den Anstelleinrichtungen gibt es innerhalb der Haspeleinrichtung weitere Verschleißteile, typischerweise in Form von Andrückrollen und/oder Umlenkschilden, die jeweils an der Innenseite der Umlenkschalen lösbar befestigt sind. Sollten diese Teile abgenutzt sein, so werden sie erfindungsgemäß mit Hilfe einer zweiten Trageinrichtung von der jeweiligen Umlenkschale zu einem Aufsatz auf einem Bundwagen transportiert. Wenn diese Teile als nicht-abgenutzte oder neuwertige Ersatzteile in die Haspeleinrichtung hinein transportiert werden müssen, so werden sie mit Hilfe der besagten zweiten Trageinrichtung von dem Aufsatz des Bundwagens zu ihrer jeweiligen Umlenkschale innerhalb der Haspeleinrichtung transportiert. Im Unterschied zu der ersten Trageinrichtung dient die zweite Trageinrichtung zum Transport von Teilen innerhalb der Haspeleinrichtung.

Die erste und die zweite Trageinrichtung können auch baugleich ausgebildet sein. Anstelle der ersten und der zweiten Trageinrichtung kann auch nur eine einzige Trageinrichtung vorgesehen sein, die dann vorzugsweise ausgebildet ist, sowohl innerhalb wie auch außerhalb der Haspeleinrichtung zu agieren.

Gemäß einem weiteren Ausführungsbeispiel der Erfindung sind der Drehpunkt für mindestens eine erste Umlenkschale und der umlenkschalenferne Anlenkpunkt der die erste Umlenkschale anstellenden Anstelleinrichtung an der Brücke oder an einem der Brückenköpfe angebracht. Demgegenüber sind der Drehpunkt für mindestens eine zweite Umlenkschale und der umlenkschalenferne Anlenkpunkt einer zweiten Anstelleinrichtung, die die zweite Umlenkschale anlenkt, an der Haspeleinrichtung angebracht. Durch die beanspruchte teilweise Anbringung der Dreh- und Anlenkpunkte an der Brücke oder an den Brückenköpfen wird insbesondere in den Seitenbereichen der Haspeleinrichtung ein Freiraum geschaffen, der insbesondere die Wartung erleichtert. Konkret bietet sich der so gewonnene Freiraum an, um bei der Wartung die notwendigen abgenutzten Teile oder die Ersatzteile schnell handhaben zu können, bevorzugt ohne Nutzung des "beschäftigten" Hallenkrans. Die Wartung kann deshalb oftmals schneller ausgeführt werden und Wartungsstillstände können kurzgehalten werden.

Gemäß einem weiteren Ausführungsbeispiel der Erfindung ist die Brücke an ihrer Einlauf- und Auslaufseite jeweils auf Brückenköpfen gelagert, die ihrerseits über Brückenpfeiler mit einem Fundament verbunden sind. Die erfindungsgemäße Haspeleinrichtung ist typischerweise stationär zwischen den Brückenpfeilern angeordnet. Deshalb sind die Freiräume in den Seitenbereichen der Haspeleinrichtung traditionell begrenzt. Aufgrund der beanspruchten teilweisen Aufhängung der Umlenkschalen und ihrer Anstelleinrichtungen an der Brücke und/oder an den Brückenköpfen können die Freiräume vorteilhafterweise vergrößert werden, weil traditionell dafür benötigter Raum in den Seitenbereichen jetzt nicht mehr benötigt wird.

Die oben genannte Aufgabe der Erfindung wird weiterhin durch eine Warmwalzstraße sowie durch eine Mehrzahl von Verfahren zum Warten der Haspeleinrichtung gelöst. Die Vorteile dieser Lösungen entsprechen den oben mit Bezug auf die genannten Vorrichtungen genannten Vorteilen.

Der Erfindung sind 5 Figuren beigefügt, wobei
- Fig. 1: die erfindungsgemäße Vorrichtung mit ersten Trageinrichtungen;
- Fig. 2: die erfindungsgemäße Vorrichtung mit zweiten Trageinrichtungen;
- Fig. 3: die erfindungsgemäße Vorrichtung mit einem Bundtransportwagen in einer perspektivischen Ansicht;
- Fig. 4: die Vorrichtung gemäß Fig. 3 in einer Querschnittsansicht; und
- Fig. 5: eine Warmwalzstraße mit der erfindungsgemäßen Vorrichtung zeigt.

Nachfolgend wird die Erfindung unter Bezugnahme auf die genannten Figuren in Form von Ausführungsbeispielen detailliert beschrieben. In allen Figuren sind gleiche technische Elemente mit gleichen Bezugszeichen gezeichnet. Wenn die Bezugszeichen, wie z.B. 114 und 116, ohne nachfolgende Nummerierung verwendet werden, so kommt es in diesen Fällen nicht auf eine Unterscheidung von entsprechenden gleichartigen Vorrichtungsmerkmalen an.

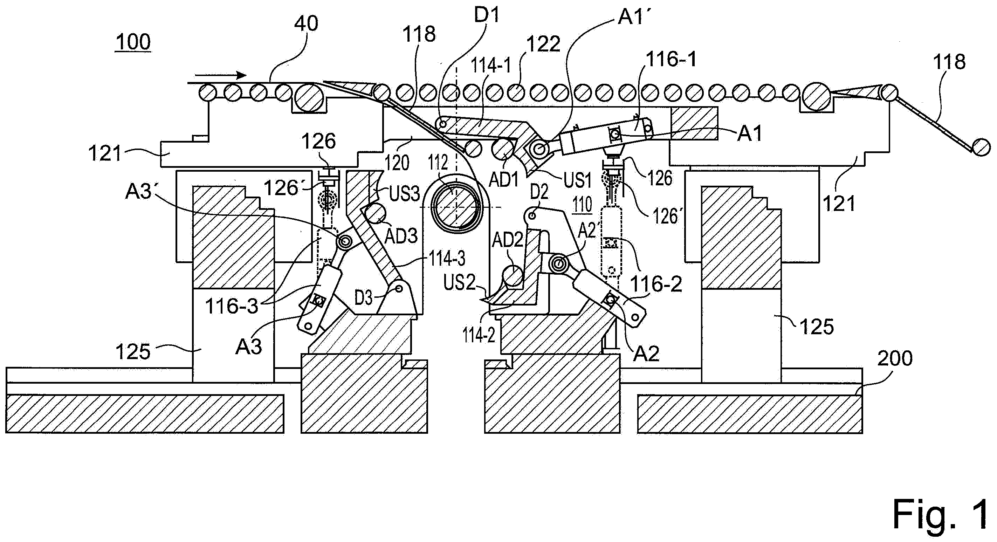

Fig. 1 zeigt die erfindungsgemäße Vorrichtung 100. Sie besteht aus einer Haspeleinrichtung 110 mit einem Haspeldorn 112 zum Aufwickeln eines Bandes 40, insbesondere eines Metallbandes zu einem Coil, und einer Brücke 120, die sich über der Haspeleinrichtung 110 erstreckt. Die Brücke 120 stützt sich über Brückenköpfe 121 und Brückenpfeiler 125 auf einem Fundament 200 ab. Die Haspeleinrichtung 110 ist stationär zwischen den Brückenpfeilern 125 eingebaut. Die Haspeleinrichtung 110 weist einlaufseitig einen Schachtrollentisch 118 und neben dem Haspeldorn 112 an dessen Umfang verteilt mindestens 2 Umlenkschalen 114 auf zum Führen des Bandes beim Wickeln um den Haspeldorn 112 herum. Außerdem weist die Haspeleinrichtung 110 Anstelleinrichtungen 116 auf zum individuellen Anstellen der Umlenkschalen 114 an der Peripherie des Haspeldorns 112. Die Umlenkschalen 114 sind jeweils um einen Drehpunkt D drehbar gelagert. Die Anstelleinrichtungen 116 weisen jeweils einen umlenkschalenseitigen Anlenkpunkt A1', A2', A3' auf, mit dem sie an den Umlenkschalen 114 angelenkt sind. Darüber hinaus weisen sie jeweils einen umlenkschalenfernen Anlenkpunkt A1, A2, A3, auf. Der Drehpunkt D1 für die erste Umlenkschale 114-1 und der umlenkschalenferne Anlenkpunkt A1 der ersten Anstelleinrichtung 116-1, mit deren Hilfe die erste Umlenkschale 114-1 angestellt wird, sind an der Brücke 120 oder an einem der Brückenköpfe 121 angebracht. Demgegenüber sind die Drehpunkte D2, D3 für die zweite und dritte Umlenkschale 114-2, 114-3 und die umlenkschalenfernen Anlenkpunkte A2, A3 der die zweite Umlenkschale 114-2 und die dritte Umlenkschale 114-3 anstellenden Anstelleinrichtungen 116-2, 116-3 an der Haspeleinrichtung 110 oder dem Fundament 200 angebracht. Die Anstelleinrichtungen 116 sind jeweils entweder in Form eines Hydraulikzylinders oder eines elektrischen oder eines pneumatischen Stellantriebs ausgebildet. Die Brücke 120 kann beispielsweise als Rollgang mit Rollgangsrollen 122 ausgebildet sein. Zumindest einzelne der Rollgangsrollen können von einem Elektromotor, in Figur 1, nicht gezeigt, direkt angetrieben sein. Das Wort "direkt" bedeutet in diesem Zusammenhang, dass zwischen dem Elektromotor und der angetriebenen Rollgangsrolle 122 allenfalls eine Kupplung, nicht jedoch zum Beispiel eine Übertragungswelle angebracht ist.

Erfindungsgemäß ist mindestens eine Trageinrichtung 126, 128 an der Brücke 120 oder den Brückenköpfen 121, vorzugsweise an deren Unterseite angebracht zum Transportieren von Teilen der Haspeleinrichtung 110.

In Figur 1 sind erste Trageinrichtungen 126, vorzugsweise mit zugehörigen Laufkatzen 126' zu erkennen, die an der Antriebsseite AS und/oder an der Bedienseite BS über die Breite der Haspeleinrichtung 110 hinaus ausfahrbar oder schwenkbar sind oder hinausragen. Sie dienen insbesondere zum Transportieren der Anstelleinrichtungen 116 aus der Haspeleinrichtung 110 heraus, wenn diese nach längerem Betrieb in der Haspeleinrichtung abgenutzt bzw. verschlissen sind. Alternativ dienen diese Trageinrichtungen 126 zum Verbringen von neuen bzw. instandgesetzten Anstelleinrichtungen 116 als Ersatzteile in die Haspeleinrichtung 110 hinein. Die Trageinrichtungen 126 erstrecken sich oder sind erstreckbar insbesondere senkrecht zur Zeichenebene der Figur 1.

An den Innenseiten der Umlenkschalen 114 sind jeweils eine Andrückrolle AD1-AD3 und/oder ein Umlenkschild US1-US3 lösbar befestigt.

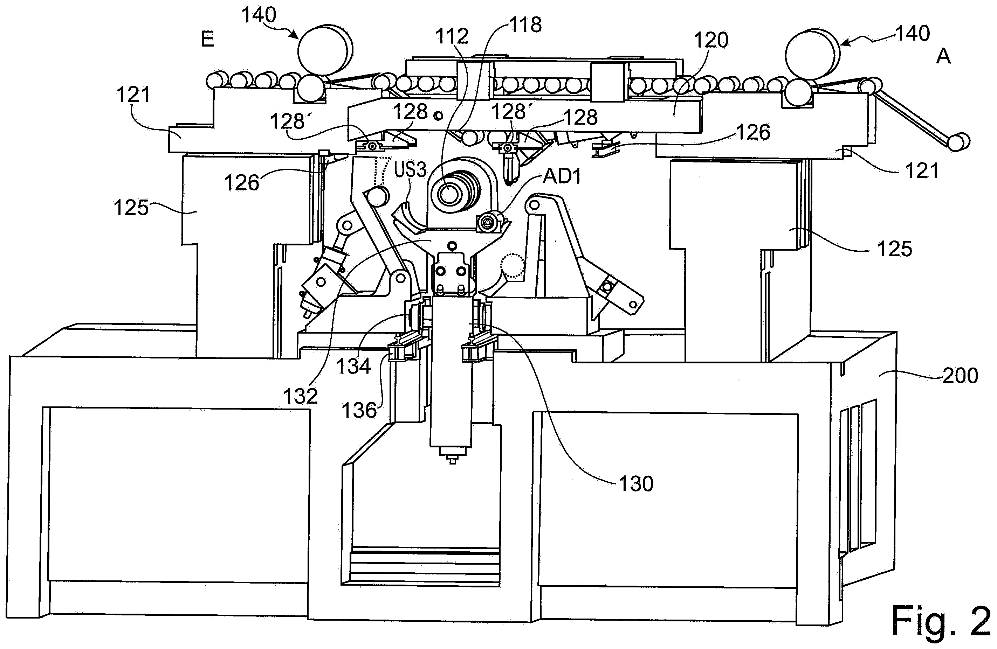

Beides sind ebenfalls Verschleißteile, die nach einer gewissen Einsatzzeit im Betrieb der Haspeleinrichtung 110 ausgewechselt werden müssen. Dies geschieht gemäß Figur 2 mit Hilfe eines Bundtransportwagens 130, der mit Hilfe eigener Räder 134 auf Schienen 136 in die Haspeleinrichtung 110 einfahrbar und aus dieser herausfahrbar ist. Der Bundtransportwagen 130 verfügt über einen Aufsatz 132 zur Aufnahme der Andrückrollen AD1-AD3 und/oder der Umlenkschilde US1-US3. Um die Umlenkschilde US1-US3 bzw. die Andrückrollen AD1-AD3 innerhalb der Haspeleinrichtung 110 zwischen den Umlenkschalen 114 und dem Aufsatz 132 transportieren zu können, sind erfindungsgemäß zweite Trageinrichtungen 128 vorgesehen, die sich innerhalb der Haspeleinrichtung 110 insbesondere quer zur Längsachse des Haspeldorns 112 erstrecken oder erstreckbar sind. Diese zweiten Trageinrichtungen 128 sind genauso wie die ersten Trageinrichtungen 126 an der Brücke 120 oder den Brückenköpfen 121, vorzugsweise an deren Unterseite angebracht.

Sowohl für die ersten wie auch für die zweiten Trageinrichtungen 126, 128 gilt, dass sie - insbesondere, wenn sie als Tragschienen ausgebildet sind - entweder ausfahrbar oder erstreckbar, beispielsweise teleskopierbar, oder starr ausgebildet sein können. Soweit sie ausfahrbar ausgebildet sind, sind zugehörige Laufkatzen 126', 128' entbehrlich. Wenn die Tragschienen jedoch starr ausgebildet sind, empfiehlt sich das Verfahren der Teile der Haspeleinrichtung mit Hilfe der besagten Laufkatzen 126', 128' entlang der Tragschienen.

Das Anhängen der Teile an den Trageinrichtungen und/oder das Abhängen der Teile davon kann mit Hilfe einer Hebeeinrichtung, wie z.B. einem Seil- oder Flaschenzug erfolgen.

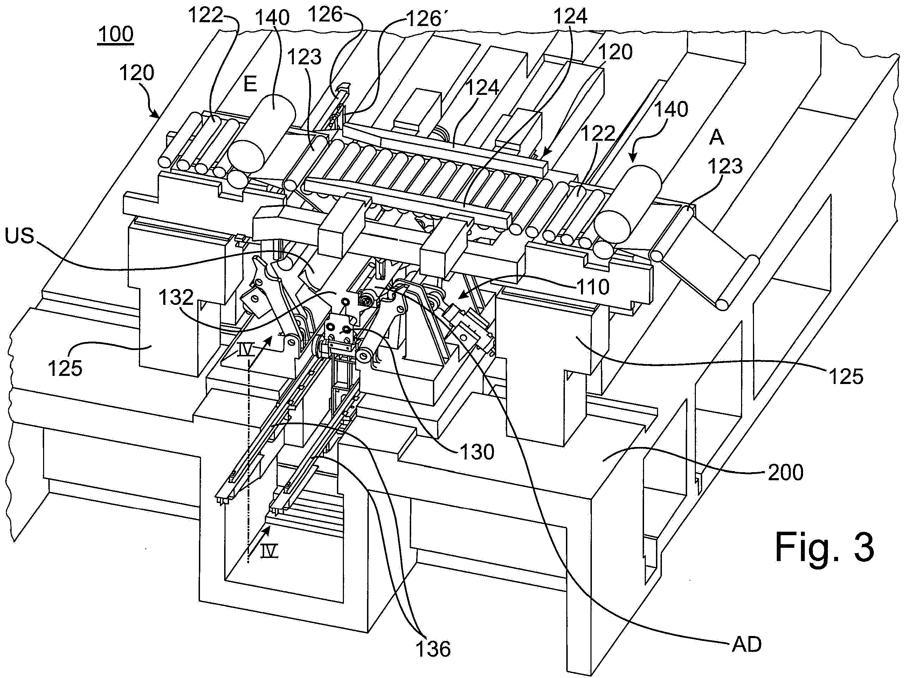

Figur 3 zeigt die erfindungsgemäße Vorrichtung in einer perspektivischen Ansicht. Besonders gut sind die Schienen 136 zu erkennen, mit denen der Bundtransportwagen 130 aus der Haspeleinrichtung 110 heraus oder in diese hinein verfahrbar ist. Weiterhin ist die Ausbildung der Brücke 120 in Form eines Rollgangs mit den Rollgangsrollen 122 und beidseitigen Seitenführungen 124 zu erkennen. Alternativ zur Ausbildung als Rollgang kann die Brücke 120 auch z.B. mit Kufen oder Überleitblechen ausgebildet sein, in Figur 3 nicht gezeigt, zum Überleiten des Bandes über die Haspeleinrichtung 110 hinweg. Weiterhin sind Weichen 123 auf der Brücke 120 erkennbar, mit denen das von der Eingangsseite E herkommende Band entweder in die Haspeleinrichtung 110 hineingeführt wird, um dort zu dem Coil aufgewickelt zu werden, oder alternativ über die Brücke 120 an die Ausgangsseite A geleitet wird. Die Brücke kann - insbesondere, wenn sie Teil der letzten Haspeleinrichtung aus einer Mehrzahl von hintereinander angeordneten Haspeleinrichtungen ist - an ihrem auslaufseitigen Ende mit einer Fangvorrichtung ausgestattet sein zum Verhindern, dass nicht-aufgehaspeltes Band unkontrolliert über die letzte Haspeleinrichtung hinausschießt und Schaden anrichtet (nicht dargestellt). Schließlich sind an der Einlaufseite E und/oder an der Auslaufseite A Treibereinrichtungen 140 montiert zum Fördern des Bandes.

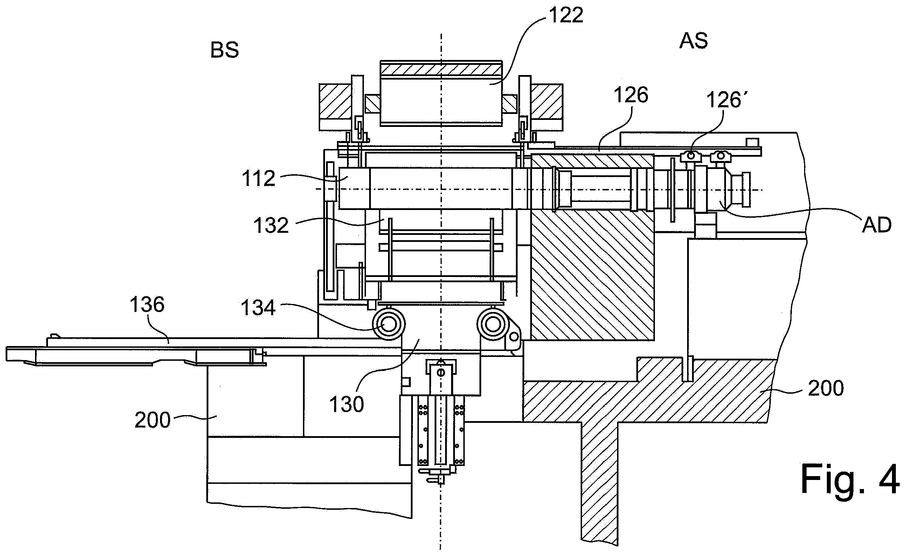

Figur 4 zeigt einen Querschnitt durch Figur 3, wie dort angedeutet. Figur 4 veranschaulicht insbesondere die Bedienseite BS und die Antriebsseite AS. Besonders gut sind zu erkennen die Schiene 136 zum Verfahren des Bundwagens 130 sowie die Trageinrichtungen 126 mit den zugehörigen Laufkatzen 126' zum Verfahren von insbesondere den Anstelleinrichtungen 116 auf die Antriebsseite AS.

Gegenstand der vorliegenden Erfindung sind auch die folgenden Verfahren zum Warten der Haspeleinrichtung 110.

Ein erstes Verfahren im Rahmen der Wartung betrifft den Ausbau der mindestens einen Anstelleinrichtung 116 aus der Haspeleinrichtung 110, wenn die Anstelleinrichtung abgenutzt oder verschlissen ist. Dieses Verfahren sieht folgende Schritte vor:
a) Anhängen der Anstelleinrichtung 116 vorzugsweise mit Hilfe einer Hebeeinrichtung, in den Figuren nicht gezeigt, an die Trageinrichtung 126 oder an deren Laufkatze 126' innerhalb der Haspeleinrichtung 110;
b) Lösen der Anstelleinrichtung innerhalb der Haspeleinrichtung 110; und
c) Ausbringen der Anstelleinrichtung 116 aus der Haspeleinrichtung 110 durch Verfahren der ersten Trageinrichtung 126 oder von deren Laufkatze 126' mit der angehängten Anstelleinrichtung 116 auf die Bedienseite BS oder die Antriebsseite AS der Haspeleinrichtung 110. Das Verfahren kann auch ein Verschwenken bedeuten, insbesondere wenn es sich bei der Trageinrichtung um einen Kran handelt.

Ein weiteres Verfahren im Rahmen der Wartung betrifft den Einbau der mindestens einen Anstelleinrichtung in die Haspeleinrichtung 110 als neues bzw. instandgesetztes Ersatzteil, zum Ersatz einer verschlissenen Anstelleinrichtung. Dieses Verfahren umfasst die folgenden Schritte:
a) Ausfahren der ersten Trageinrichtung 126 oder von deren Laufkatze 126' nach außerhalb der Haspeleinrichtung 110 auf deren Bedienseite BS oder Antriebsseite AS. Das Ausfahren kann auch ein Verschwenken bedeuten, insbesondere wenn es sich bei der Trageinrichtung um einen Kran handelt.
b) Anhängen der Anstelleinrichtung 116 an die erste Trageinrichtung 126 oder an deren Laufkatze 126', vorzugsweise mit Hilfe der Hebeeinrichtung;
c) Verfahren der ersten Trageinrichtung 126 oder von deren Laufkatze 126' mit der angehängten Anstelleinrichtung 116 in die Haspeleinrichtung 110 hinein;
d) Befestigen der Anstelleinrichtung 116 innerhalb der Haspeleinrichtung 110 an ihren Anlenkpunkten; und
e) Lösen der Anstelleinrichtung 116 von der ersten Trageinrichtung 126 oder von deren Laufkatze 126' oder von der Hebeeinrichtung.

Im Rahmen der Wartung der stationären Haspeleinrichtung 110 kann auch der Ausbau der Andrückrollen AD1-AD3 und/oder der Umlenkschilder US1-US3 erforderlich werden, wenn diese abgenutzt oder verschlissen sind. Dieses Verfahren umfasst die folgenden Schritte:
a) Einfahren eines Bundtransportwagens 130 mit einem leeren Aufsatz 132 für die Andrückrolle AD1-AD3 und/oder das Umlenkschild US1-US3 in die Haspeleinrichtung 110 hinein;
b) Anhängen der Andrückrolle AD1-AD3 und/oder des Umlenkschildes US1-US3 vorzugsweise mit Hilfe der Hebeeinrichtung an eine zweite Trageinrichtung 128;
c) Lösen der Andrückrolle AD1-AD3 und/oder des Umlenkschildes US1-US3 von der Umlenkschale 114-1, 114-2, 114-3; d) Transportieren der Andrückrolle AD1-AD3 und/oder des Umlenkschildes US1-US3 mit Hilfe der zweiten Trageinrichtung 128 und vorzugsweise mit deren Laufkatze 128' zu dem Aufsatz 132;
e) Ablegen der Andrückrolle AD1-AD3 und/oder des Umlenkschildes US1-US3 auf dem Aufsatz 132 des Bundtransportwagens 130 und Lösen der Teile von der Trageinrichtung 128; und
f) Ausfahren des Bundtransportwagens 130 mit der Andrückrolle AD1-AD3 und/oder dem Umlenkschild US1-US3 aus der Haspeleinrichtung 110 heraus, vorzugsweise auf dessen Bedienseite.

Schließlich kann das erfindungsgemäße Verfahren zum Warten der stationären Haspeleinrichtung 110 auch den Einbau neuer bzw. instandgesetzter Andrückrollen AD1-AD3 und/oder von Umlenkschilden US1-US3 vorsehen als Ersatzteile für entsprechende verschlissene Bauteile. Dieses Einbauverfahren sieht die folgenden Schritte vor:
a) Einfahren des Bundtransportwagens 130 mit der Andrückrolle AD1-AD3 und/oder dem Umlenkschild US1-US3 in die Haspeleinrichtung 110 hinein, typischerweise von dessen Bedienseite BS her;
b) Anhängen der Andrückrolle AD1-AD3 und/oder des Umlenkschildes US1-US3 vorzugsweise mit Hilfe der Hebeeinrichtung an die zweite Trageeinrichtung;
c) Transportieren der Andrückrolle AD1-AD3 und/oder des Umlenkschildes US1-US3 mit Hilfe der zweiten Trageinrichtung 128 und vorzugsweise mit deren Laufkatze 128' von dem Bundtransportwagen 130 zu ihrer jeweiligen Umlenkschale;
d) Befestigen der Andrückrolle AD1-AD3 und/oder des Umlenkschildes US1-US3 an der Umlenkschale (114-1, 114-2, 114-3) innerhalb der Haspeleinrichtung 110;
e) Lösen der Teile von der zweiten Tragerichtung; undf) Ausfahren des Bundtransportwagens 130 mit dem geleerten Aufsatz 132 aus der Haspeleinrichtung 110 heraus, typischerweise auf dessen Bedienseite.

In allen beschriebenen Verfahren ist die Reihenfolge der Schritte nicht zwingend. Vielmehr können die Schritte auch in jeder anderen sinnvollen Reihenfolge ausgeführt werden.

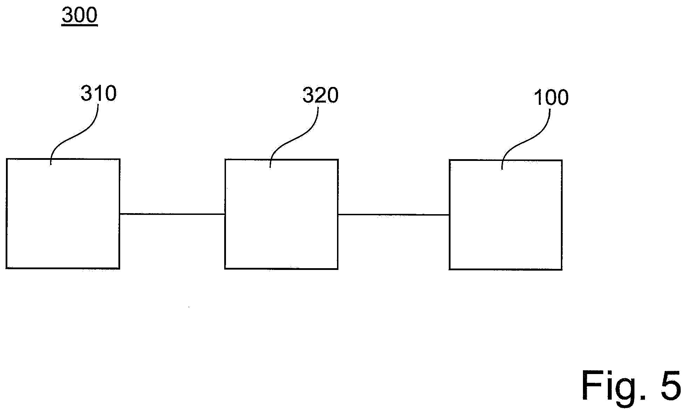

Schließlich ist Gegenstand der vorliegenden Erfindung eine Warmwalzstraße 300, wie sie in Figur 5 gezeigt ist. Sie umfasst eine Fertigwalzstraße 310 zum Warmwalzen des Bandes, optional eine der Fertigwalzstraße 310 nachgeordnete Kühlstrecke 320 zum Kühlen des warmgewalzten Bandes, und eine Vorrichtung 100, wie sie zuvor beschrieben wurde, mit der stationären Haspeleinrichtung 110 in der Linie der Fertigwalzstraße 310 zum wahlweisen Aufhaspeln des gekühlten warmgewalzten Bandes.

### Bezugszeichenliste

- 40: Band
- 100: Vorrichtung
- 110: Haspeleinrichtung
- 112: Haspeldorn
- 114: Umlenkschale
- 114-1: 1. Umlenkschale
- 114-2: 2. Umlenkschale
- 114-3: 3. Umlenkschale
- 116: Anstelleinrichtung für Umlenkschale
- 116-1: 1. Anstelleinrichtung
- 116-2: 2. Anstelleinrichtung
- 116-3: 3. Anstelleinrichtung
- 118: Schachtrollentisch
- 120: Brücke
- 121: Brückenkopf
- 122: Rollgangsrollen
- 123: Weiche
- 124: Seitenführungen
- 125: Brückenpfeiler
- 126: 1. Trageinrichtung
- 126': Laufkatze
- 128: 2. Trageinrichtung
- 128': Laufkatze
- 130: Bundtransportwagen
- 132: Aufsatz für Bundtransportwagen
- 134: Räder
- 136: Schienen
- 140: Treibereinrichtung
- 200: Fundament
- 300: Warmwalzstraße
- 310: Fertigwalzstraße
- 320: Kühlstrecke
- A: Auslaufseite
- AD1-AD3: Andrückrolle
- AS: Antriebsseite
- A1: Umlenkschalenferner Anlenkpunkt der 1. Umlenkschale
- A1': Umlenkschalenseitiger Anlenkpunkt der 1. Umlenkschale
- A2: Umlenkschalenferner Anlenkpunkt der 2. Umlenkschale
- A2': Umlenkschalenseitiger Anlenkpunkt der 2. Umlenkschale
- A3: Umlenkschalenferner Anlenkpunkt der 3. Umlenkschale
- A3': Umlenkschalenseitiger Anlenkpunkt der 3. Umlenkschale
- BS: Bedienseite
- D1: Drehpunkt der 1. Umlenkschale
- D2: Drehpunkt der 2. Umlenkschale
- D3: Drehpunkt der 3. Umlenkschale
- E: Einlaufseite
- US1-US3: Umlenkschild

## Patentansprüche

1. Vorrichtung (100) aufweisend
mindestens eine Haspeleinrichtung (110) mit einem Haspeldorn (112) zum Aufwickeln eines Bandes (40) , insbesondere eines Metallbandes, zu einem Coil, mit mindestens zwei am Umfang des Haspeldorns (112) verteilt angeordneten Umlenkschalen (114-1, 114-2, 114-3) zum Führen des Bandes beim Wickeln um den Haspeldorn (112) herum und mit Anstelleinrichtungen (116-1, 116-2, 116-3) zum individuellen Anstellen der Umlenkschalen (114-1, 114-2, 114-3) an der Peripherie des Haspeldorns (112); und
eine Brücke (120), die auf Brückenköpfen (121) gelagert ist und sich über der Haspeleinrichtung (110) erstreckt;
**dadurch gekennzeichnet,**
**dass** mindestens eine Trageinrichtung (126, 128) an der Brücke (120) und/oder an den Brückenköpfen angebracht ist zum Anhängen von Teilen der Haspeleinrichtung (110).

2. Vorrichtung (100) nach Anspruch 1,
**dadurch gekennzeichnet,**
**dass** die Trageinrichtung (126, 128) in Form eines Hakens zum Anhängen der Teile, oder in Form einer vorzugsweise teleskopierbaren Tragschiene oder eines Krans, vorzugsweise jeweils mit einer Laufkatze (126', 128') zum Anhängen und Transportieren der Teile ausgebildet ist; und
**dass** der Trageinrichtung eine Hebeeinrichtung, beispielsweise in Form eines Seil- oder Flaschenzugs zugeordnet ist zum Anhängen, Anheben oder Absenken der Teile der Haspeleinrichtung.

3. Vorrichtung nach Anspruch 2,
**gekennzeichnet durch**
mindestens eine erste Trageinrichtung (126), beispielsweise in Form der Tragschiene oder des Krans, die/der an der Antriebsseite (AS) und/oder der Bedienseite (BS) der Haspeleinrichtung (110) über die Breite der Haspeleinrichtung (110) hinaus ausfahrbar oder schwenkbar ist oder hinausragt, zum Transportieren der Anstelleinrichtungen (116-1, 116-2, 116-3) als abgenutzte Teile aus der Haspeleinrichtung (110) heraus oder als Ersatzteil in die Haspeleinrichtung (110) hinein.

4. Vorrichtung (100) nach einem der vorangegangenen Ansprüche,
**dadurch gekennzeichnet,**
**dass** an der Innenseite der Umlenkschalen (114-1, 114-2, 114-3) jeweils eine Andrückrolle (AD1-AD3) und/oder ein Umlenkschild (US1-US3) lösbar befestigt ist/sind; und
**dass** ein Bundtransportwagen (130) mit einem Aufsatz (132) für die Andrückrollen (AD1-AD3) und/oder die Umlenkschilde (US1-US3) vorgesehen ist zum Transportieren der Andrückrollen (AD1-AD3) und/oder der Umlenkschilde (US1-US3) als abgenutzte Teile aus der Haspeleinrichtung (110) heraus - vorzugsweise auf die Bedienseite (BS) - oder als Ersatzteile in die Haspeleinrichtung (110) hinein.

5. Vorrichtung (100) nach Anspruch 4,
**gekennzeichnet durch**
mindestens eine zweite Trageinrichtung (128), beispielsweise in Form der Tragschiene oder des Krans, zum Transportieren der Umlenkschilde (US) und/oder der Andrückrollen (AD1-AD3) als abgenutzte Teile innerhalb der Haspeleinrichtung (110) von der jeweiligen Umlenkschale (114) zu dem Aufsatz (132) des Bundtransportwagens (130) oder innerhalb der Haspeleinrichtung (110) als Ersatzteile von dem Aufsatz (132) zu der jeweiligen Umlenkschale (114).

6. Vorrichtung (100) nach einem der Ansprüche 3 bis 5,
**dadurch gekennzeichnet,**
**dass** die erste und die zweite Transporteinrichtung identisch sind.

7. Vorrichtung (100) nach einem der vorangegangenen Ansprüche,
**dadurch gekennzeichnet,**
**dass** die Umlenkschalen jeweils um einen Drehpunkt (D1, D2, D3) drehbar gelagert sind;
**dass** die Anstelleinrichtungen (116-1, 116-2, 116-3) jeweils einen umlenkschalenseitigen Anlenkpunkt (A1', A2', A3'), mit dem sie an den Umlenkschalen angelenkt sind, und einen umlenkschalenfernen Anlenkpunkt (A1, A2, A3) aufweisen;
**dass** der Drehpunkt (D1) für mindestens eine erste der Umlenkschalen (114-1) und der umlenkschalenferne Anlenkpunkt (A1) der die erste Umlenkschale (114-1) anstellenden Anstelleinrichtung (116-1) an der Brücke (120) oder an einem der Brückenköpfe (121) angebracht sind; und
**dass** der Drehpunkt (D2, D3) für mindestens eine zweite der Umlenkschalen (114-2, 114-3) und der umlenkschalenferne Anlenkpunkt (A2, A3) der die zweite Umlenkschale (114-2, 114-3) anstellenden Anstelleinrichtung (116-2, 116-3) an der Haspeleinrichtung (110) angebracht sind.

8. Vorrichtung (100) nach einem der vorangegangenen Ansprüche,
**dadurch gekennzeichnet,**
**dass** an der Einlaufseite (E) und optional auch an der Auslaufseite (A) der Brücke (120) jeweils eine Treibereinrichtung (140) vorgesehen ist zum Fördern des Bandes.

9. Vorrichtung (100) nach einem der vorangegangenen Ansprüche,
**dadurch gekennzeichnet,**
**dass** die Brückenköpfe (121) an der Einlaufseite (E) und an der Auslaufseite (A) der Brücke (120) jeweils auf Brückenpfeilern (125) montiert sind, über welche die Brückenköpfe (121) und die Brücke (120) mit einem Fundament (200) verbunden sind und zwischen denen die Haspeleinrichtung (110) stationär angeordnet ist.

10. Vorrichtung (100) nach einem der vorangegangenen Ansprüche,
**dadurch gekennzeichnet,**
**dass** die Brücke (120) ausgebildet ist zum Leiten des Bandes über die Haspeleinrichtung (100) hinweg; und
**dass** eine an der Einlaufseite (E) der Brücke angeordnete Weiche (123) vorgesehen ist zum alternativen Leiten des Bandes in die Haspeleinrichtung (110) hinein oder über die Brücke (120) über die Haspeleinrichtung (110) hinweg.

11. Vorrichtung (100) nach Anspruch 10,
**dadurch gekennzeichnet,**
**dass** die Brücke (120) als Rollgang mit Rollgangsrollen (122) ausgebildet ist; dass - vorzugsweise - zumindest einzelne der Rollgangsrollen (122) von einem Elektromotor direkt angetrieben sind; und
**dass** - vorzugsweise - Seitenführungen (124) an den beiden Seiten des Rollgangs vorgesehen sind zum Führen des Bandes.

12. Vorrichtung (100) nach einem der vorangegangenen Ansprüche,
**dadurch gekennzeichnet,**
**dass** die Anstelleinrichtungen (116) jeweils ausgebildet sind in Form eines Hydraulikzylinders, eines elektrischen oder eines pneumatischen Stellantriebs.

13. Warmwalzstraße (300) mit
einer Fertigwalzstraße (310) zum Warmwalzen eines Bandes;
einer der Fertigwalzstraße (310) nachgeordnete Kühlstrecke (320) zum Kühlen des warmgewalzten Bandes; und
einer Vorrichtung (100) nach einem der vorangegangenen Ansprüche mit der stationären Haspeleinrichtung (110) in der Linie der Fertigwalzstraße zum wahlweisen Aufhaspeln des gekühlten warmgewalzten Bandes.

14. Verfahren zum Warten der stationären Haspeleinrichtung (110) innerhalb der Vorrichtung (100) nach einem der Ansprüche 1 bis 12,
**gekennzeichnet durch** folgende Schritte zum Ausbau der mindestens einen Anstelleinrichtung (116) als abgenutztes Teil:
a) Anhängen der Anstelleinrichtung (116) vorzugsweise mit Hilfe der Hebeeinrichtung an die erste Trageinrichtung (126) oder anderen Laufkatze (126') innerhalb der Haspeleinrichtung (110);
b) Lösen der Anstelleinrichtung innerhalb der Haspeleinrichtung (110); und
c) Ausbringen der Anstelleinrichtung (116) aus der Haspeleinrichtung (110) durch Verfahren der ersten Trageinrichtung (126) oder von deren Laufkatze (126') mit der angehängten Anstelleinrichtung (116) auf die Bedienseite (BS) oder die Antriebsseite (AS) der Haspeleinrichtung (110).

15. Verfahren zum Warten der stationären Haspeleinrichtung (110) innerhalb der Vorrichtung (100) nach einem der Ansprüche 1 bis12,
**gekennzeichnet durch** folgende Schritte zum Einbau der mindestens einen Anstelleinrichtung (116) als Ersatzteil:
a) Ausfahren der ersten Trageinrichtung (126) oder von deren Laufkatze (126') nach außerhalb der Haspeleinrichtung (110) auf deren Bedienseite (BS) oder Antriebsseite (AS);
b) Anhängen der Anstelleinrichtung (116) an die erste Trageinrichtung (126) oder an deren Laufkatze (126') vorzugsweise mit Hilfe der Hebeeinrichtung;
c) Verfahren der ersten Trageinrichtung (126) oder von deren Laufkatze (126') mit der angehängten Anstelleinrichtung (116) in die Haspeleinrichtung (110) hinein;
d) Befestigen der Anstelleinrichtung (116) innerhalb der Haspeleinrichtung (110) an ihren Anlenkpunkten; und
e) Lösen der Anstelleinrichtung (116) von der ersten Trageinrichtung (126) oder von deren Laufkatze (126').

16. Verfahren zum Warten der stationären Haspeleinrichtung innerhalb der Vorrichtung (100) nach einem der Ansprüche 1 bis 12,
**gekennzeichnet durch** folgende Schritte zum Ausbau der Andrückrolle (AD1-AD3) und/oder des Umlenkschildes (US1-US3) als abgenutzte Teile aus der Haspeleinrichtung (110):
a) Einfahren eines Bundtransportwagens (130) mit einem leeren Aufsatz (132) für die Andrückrolle (AD1-AD3) und/oder das Umlenkschild (US1-US3) in die Haspeleinrichtung (110) hinein;
b) Anhängen der Andrückrolle AD1-AD3 und/oder des Umlenkschildes US1-US3 vorzugsweise mit Hilfe der Hebeeinrichtung an eine zweite Trageinrichtung 128;
c) Lösen der Andrückrolle (AD1-AD3) und/oder des Umlenkschildes (US1-US3) von der Umlenkschale (114-1, 114-2, 114-3);
d) Transportieren der Andrückrolle (AD1-AD3) und/oder des Umlenkschildes (US1-US3) mit Hilfe der zweiten Trageinrichtung (128) und vorzugsweise mit deren Laufkatze (128') zu dem Aufsatz (132);
e) Ablegen der Andrückrolle (AD1-AD3) und/oder des Umlenkschildes (US1-US3) auf dem Aufsatz (132) des Bundtransportwagens (130) und Lösen der Teile von der Trageinrichtung 128; und
f) Ausfahren des Bundtransportwagens (130) mit der Andrückrolle (AD1-AD3) und/oder dem Umlenkschild (US1-US3) aus der Haspeleinrichtung (110) heraus, vorzugsweise auf dessen Bedienseite.

17. Verfahren zum Warten der stationären Haspeleinrichtung (110) innerhalb der Vorrichtung (100) nach einem der Ansprüche 1 bis 12,
**gekennzeichnet durch** folgende Schritte zum Einbau der Andrückrolle (AD1-AD3) und/oder des Umlenkschildes (US1-US3) als Ersatzteil in der Haspeleinrichtung (110):
a) Einfahren des Bundtransportwagens (130) mit der Andrückrolle (AD1-AD3) und/oder dem Umlenkschild (US1-US3) in die Haspeleinrichtung (110) hinein, typischerweise von dessen Bedienseite (BS) her;
b) Anhängen der Andrückrolle AD1-AD3 und/oder des Umlenkschildes US1-US3 vorzugsweise mit Hilfe der Hebeeinrichtung an die zweite Trageeinrichtung;c) Transportieren der Andrückrolle (AD1-AD3) und/oder des Umlenkschildes (US1-US3) mit Hilfe der zweiten Trageinrichtung (128) und vorzugsweise mit deren Laufkatze (128') von dem Bundtransportwagen (130) zu ihrer jeweiligen Umlenkschale;
d) Befestigen der Andrückrolle (AD1-AD3) und/oder des Umlenkschildes (US1-US3) an der Umlenkschale (114-1, 114-2, 114-3) innerhalb der Haspeleinrichtung (110);
e) Lösen der Teile von der zweiten Tragerichtung; und f) Ausfahren des Bundtransportwagens (130) mit dem geleerten Aufsatz (132) aus der Haspeleinrichtung (110) heraus, typischerweise auf dessen Bedienseite.

## Claims

1. Device (100) comprising
at least one coiler device (110) with a coiler mandrel (112) for winding up a strip (40), particularly a metal strip, to form a coil, with at least two deflecting shells (114-1, 114-2, 114-3), which are arranged to be distributed at the circumference of the coiler mandrel (112), for guiding the strip during winding around the coiler mandrel (112) and with adjusting devices (116-1, 116-2, 116-3) for individual adjustment of the deflecting shells (114-1, 114-2, 114-3) at the periphery of the coiler mandrel (112); and
a bridge (120) which is mounted on bridge heads (121) and extends over the coiler device (110);
**characterised in that**
at least one support device (126, 128) for suspension of parts of the coiler device (110) is mounted on the bridge (120) and/or on the bridge heads.

2. Device (100) according to claim 1,
**characterised in that**
the support device (126, 128) is constructed in the form of a hook for suspension of the parts or in the form of preferably telescopic support rails or a crane, preferably in each instance with a trolley (126', 128') for suspension and transportation of the parts; and
a lifting device, for example in the form of a tackle line or block-and-tackle, for suspension, lifting or lowering the parts of the coiler device is associated with the support device.

3. Device according to claim 2,
**characterised by**
at least one first support device (126), for example in the form of the support rail or crane, which can be moved or pivoted out or projects out at the drive side (AS) and/or the control side (BS) of the coiler device (110) over the width of the coiler device (110), for transporting the adjusting devices (116-1, 116-2, 116-3) as worn parts out of the coiler device (110) or as a replacement part into the coiler device (110).

4. Device (100) according to any one of the preceding claims,
**characterised in that**
a respective presser roller (AD1 - AD3) and/or a deflecting guard (US1 - US3) is or are detachably fastened to the inner side of the deflecting shells (114-1, 114-2, 114-3); and
a coil transport carriage (130) with an attachment (132) for the presser rollers (AD1 - AD3) and/or the deflecting guards (US1 - US3) is provided for transporting the presser rollers (AD1 - AD3) and/or the deflecting guards (US1 - US3) as worn parts out of the coiler device (110) - preferably on the control side (BS) - or as replacement parts into the coiler device (110).

5. Device (100) according to claim 4,
**characterised by**
at least one second support device (128), for example in the form of the support rail or the crane, for transporting the deflecting guards (US) and/or the presser rollers (AD1 - AD3) as worn parts within the coiler device (110) from the respective deflecting shell (114) to the attachment (132) of the coil transport carriage (13) or within the coiler device (110) as replacement parts from the attachment (132) to the respective deflecting shell (114).

6. Device (100) according to any one of claims 3 to 5,
**characterised in that**
the first and second transport devices are identical.

7. Device (100) according to any one of the preceding claims,
**characterised in that**
the deflecting shells are each mounted to be rotatable about a respective fulcrum (D1, D2, D3);
the adjusting devices (116-1, 116-2, 116-3) each have an articulation point (A1', A2', A3'), by which they are articulated to the deflecting shells, at the deflecting shell side and an articulation point (A1, A2, A3) remote from the deflecting shell;
the fulcrum (D1) for at least a first one of the deflecting shells (114-1) and the articulation point (A1, which is remote from the deflecting shell, of the adjusting device (116-1) adjusting the first deflecting shell (114-1) are arranged at the bridge (120) or at one of the bridge heads (121); and
the fulcrum (D2, D3) for at least a second one of the deflecting shells (114-2, 114-3) and the articulation point (A2, A3), which is remote from the deflecting shells, of the adjusting device (116-2, 116-3) adjusting the second deflecting shell (114-2, 114-3) are arranged at the coiler device (110).

8. Device (100) according to any one of the preceding claims,
**characterised in that**
a respective driver device (140) for conveying the strip is provided at each of the inlet side (E) and optionally also the outlet side (A) of the bridge (120).

9. Device (100) according to any one of the preceding claims,
**characterised in that**
the bridge heads (121) are mounted at the inlet side (E) and the outlet side (A) of the bridge (120) on respective bridge pillars (125), by way of which the bridge heads (121) and the bridge (120) are connected with a foundation (200) and between which the coiler device (110) is arranged in stationary position.

10. Device (100) according to any one of the preceding claims,
**characterised in that**
the bridge (120) is configured for conducting the strip away over the coiler device (110); and
a diverter (123) arranged at the inlet side (E) of the bridge is provided for alternative conducting of the strip into the coiler device (110) or over the bridge (120) to beyond the coiler device (110).

11. Device (100) according to claim 10,
**characterised in that**
the bridge (120) is constructed as a roller path with roller path rollers (122);
preferably at least individual ones of the roller path rollers (122) are directly driven by an electric motor; and
preferably lateral guides (124) for guiding the strip are provided at both sides of the roller path.

12. Device (100) according to any one of the preceding claims,
**characterised in that**
the adjusting devices (116) are each constructed in the form of a hydraulic cylinder, an electric setting drive or a pneumatic setting drive.

13. Hot-rolling train (300) with
a finishing rolling train (31) for hot-rolling a strip;
a cooling path (320), which is downstream of the finishing rolling train (310), for cooling the hot-rolled strip; and
a device (100) according to any one of the preceding claims with the stationary coiler device (11) in the line of the finishing rolling train for selectable coiling up of the cooled hot-rolled strip.

14. Method of servicing the stationary coiler device (110) within the device (100) according to any one of claims 1 to 12,
**characterised by** the following steps for demounting the at least one adjusting device (116) as a worn part:
a) suspending the adjusting device (116), preferably with the help of the lifting device, at the first support device (126) or at the trolley (126') thereof within the coiler device (110);
b) detaching the adjusting device within the coiler device (110); and
c) moving the adjusting device (116) out of the coiler device (110) by movement of the first support device (126) or the trolley (126') thereof with the suspended adjusting device (116) on the control side (BS) or the drive side (AS) of the coiler device (110).

15. Method of servicing the stationary coiler device (11) within the device (100) according to any one of claims 1 to 12,
**characterised by** the following steps for installation of the at least one adjusting device (116) as a replacement part:
a) movement out of the first support device (126) or the trolley (126') thereof to outside the coiler device (110) on the control side (BS) or drive side (AS) thereof;
b) suspending the adjusting device (116) at the first support device (126) or at the trolley (126') thereof, preferably with the help of the lifting device;
c) movement out of the first support device (126) or the trolley (126') thereof with the suspended adjusting device (116) into the coiler device (110);
d) attaching the adjusting device (116) within the coiler device (110) to its articulation point; and
e) detaching the adjusting device (116) from the first support device (126) or from the trolley (126') thereof.

16. Method of servicing the stationary coiler device within the device (100) according to any one of claims 1 to 12,
**characterised by** the following steps for demounting the presser roller (AD1 - AD3) and/or the deflecting guard (US1 - US3) as worn parts from the coiler device (110);
a) moving a coil transport carriage (130) with an empty attachment (132) for the presser roller (AD1 - AD3) and/or the deflecting guard (US1 - US3) into the coiler device (110);
b) suspending the presser roller (AD1 - AD3) and/or the deflecting guard (US1 - US3), preferably with the help of the lifting device, at a second support device (128);
c) detaching the presser roller (AD1 - AD3) and/or the deflecting guard (US1 - US3) from the deflecting shell (114-1, 114-2, 114-3);
d) transporting the presser roller (AD1 - AD3) and/or the deflecting guard (US1 - US3) with the help of the second support device (128) and preferably with the trolley (128') thereof to the attachment (132);
e) depositing the presser roller (AD1 - AD3) and/or the deflecting guard (US1 - US3) on the attachment (132) of the coil transport carriage (130) and detaching the parts from the support device (128); and
f) moving the coil transport carriage (130) with the presser roller (AD1 - AD3) and/or the deflecting guard (US1 - US3) out of the coiler device (110), preferably on the control side thereof.

17. Method of servicing the stationary coiler device (110) within the device (100) according to any one of claims 1 to 12,
**characterised by** the following steps for installation of the presser roller (AD1 - AD3) and/or the deflecting guard (US1 - US3) as a replacement part in the coiler device (110):
a) moving the coil transport carriage (130) with the presser roller (AD1 - AD3) and/or the deflecting guard (US1 - US3) into the coiler device (110), typically from the control side (BS) thereof;
b) suspending the presser roller (AD1 - AD3) and/or the deflecting guard (US1 - US3), preferably with the help of the lifting device, at the second support device;
c) transporting the presser roller (AD1 - AD3) and/or the deflecting guard (US1 - US3) with the help of the second support device (128) and preferably with the trolley (128') thereof from the coil transport carriage (130) to the respective deflecting shell thereof;
d) attaching the presser roller (AD1 - AD3) and/or the deflecting guard (US1 - US3) to the deflecting shell (114-1, 114-2, 114-3) within the coiler device (110);
e) detaching the parts from the second support device; and
f) moving the coil transport carriage (130) with the emptied attachment (132) out of the coiler device (110), typically on the control side thereof.

## Revendications

1. Dispositif (100) présentant
au moins une installation d'enroulement (110) avec un mandrin d'enroulement (112) pour l'enroulement d'une bande (40), en particulier d'une bande métallique, en une bobine, avec au moins deux coquilles de déviation (114-1, 114-2, 114-3) disposées de manière répartie à la périphérie du mandrin d'enroulement (112) pour le guidage de la bande lors de l'enroulement autour du mandrin d'enroulement (112) et avec des dispositifs d'ajustement (116-1, 116-2, 116-3) pour l'ajustement individuel des coquilles de déviation (114-1, 114-2, 114-3) à la périphérie du mandrin d'enroulement (112) ; et
un pont (120) qui est supporté sur des têtes de pont (121) et s'étend au-dessus de l'installation d'enroulement (110) ;
**caractérisé en ce qu'**au moins un dispositif de support (126, 128) est monté sur le pont (120) et/ou sur les têtes de pont pour la suspension de pièces de l'installation d'enroulement (110).

2. Dispositif (100) selon la revendication 1,
**caractérisé en ce que** le dispositif de support (126, 128) est réalisé sous la forme d'un crochet pour la suspension des pièces, ou sous la forme d'un rail de support de préférence télescopique ou d'une grue, de préférence respectivement avec un chariot (126', 128') pour la suspension et le transport des pièces ; et
**en ce qu'**un dispositif de levage, par exemple sous la forme d'un palan à câble ou à chaîne, est associé au dispositif de support pour suspendre, lever ou abaisser les pièces de l'installation d'enroulement.

3. Dispositif selon la revendication 2,
**caractérisé par**
au moins un premier dispositif de support (126), par exemple sous la forme du rail de support ou de la grue, qui peut être déployé ou pivoté ou qui fait saillie au-delà de la largeur de l'installation d'enroulement (110) du côté entraînement (en allemand : Antriebsseite, AS) et/ou du côté opérateur (en allemand : Bedienseite, BS) de l'installation d'enroulement (110), pour le transport des dispositifs d'ajustement (116-1, 116-2, 116-3) en tant que pièces usées hors de l'installation d'enroulement (110) ou en tant que pièce de rechange dans l'installation d'enroulement (110).

4. Dispositif (100) selon l'une des revendications précédentes,
**caractérisé en ce qu'**à l'intérieur des coquilles de déviation (114-1, 114-2, 114-3) sont fixés respectivement de manière amovible un rouleau presseur (AD1-AD3) et/ou un écran de déviation (US1-US3) ; et
**en ce qu'**un chariot de transport de bobines (130) avec un support (132) pour les rouleaux presseurs (AD1-AD3) et/ou les écrans de déviation (US1-US3) est prévu pour le transport des rouleaux presseurs (AD1-AD3) et/ou des écrans de déviation (US1-US3) en tant que pièces usées hors de l'installation d'enroulement (110) - de préférence sur le côté opérateur (BS) - ou en tant que pièces de rechange dans l'installation d'enroulement (110).

5. Dispositif (100) selon la revendication 4,
**caractérisé par**
au moins un deuxième dispositif de support (128), par exemple sous la forme du rail de support ou de la grue, pour le transport des écrans de déviation (US) et/ou des rouleaux presseurs (AD1-AD3) en tant que pièces usées à l'intérieur de l'installation d'enroulement (110) depuis la coquille de déviation (114) respective vers le support (132) du chariot de transport de bobines (130) ou à l'intérieur de l'installation d'enroulement (110) en tant que pièces de rechange depuis le support (132) vers la coquille de déviation (114) respective.

6. Dispositif (100) selon l'une des revendications 3 à 5,
**caractérisé en ce que** le premier et le deuxième dispositif de transport sont identiques.

7. Dispositif (100) selon l'une des revendications précédentes,
**caractérisé en ce que** les coquilles de déviation sont montées rotatives respectivement autour d'un point de rotation (D1, D2, D3) ;
**en ce que** les dispositifs d'ajustement (116-1, 116-2, 116-3) présentent respectivement un point d'articulation côté coquille de déviation (A1', A2', A3'), par lequel ils sont articulés aux coquilles de déviation, et un point d'articulation distant de la coquille de déviation (A1, A2, A3) ;
**en ce que** le point de rotation (D1) pour au moins une première des coquilles de déviation (114-1) et le point d'articulation distant de la coquille de déviation (A1) du dispositif d'ajustement (116-1) ajustant la première coquille de déviation (114-1) sont montés sur le pont (120) ou sur l'une des têtes de pont (121) ; et
**en ce que** le point de rotation (D2, D3) pour au moins une deuxième des coquilles de déviation (114-2, 114-3) et le point d'articulation distant de la coquille de déviation (A2, A3) du dispositif d'ajustement (116-2, 116-3) ajustant la deuxième coquille de déviation (114-2, 114-3) sont montés sur l'installation d'enroulement (110).

8. Dispositif (100) selon l'une des revendications précédentes,
**caractérisé en ce qu'**un dispositif d'entraînement (140) est prévu respectivement sur le côté entrée (E) et optionnellement aussi sur le côté sortie (A) du pont (120) pour le transport de la bande.

9. Dispositif (100) selon l'une des revendications précédentes,
**caractérisé en ce que** les têtes de pont (121) sur le côté entrée (E) et sur le côté sortie (A) du pont (120) sont montées respectivement sur des piliers de pont (125), par l'intermédiaire desquels les têtes de pont (121) et le pont (120) sont reliés à une fondation (200) et entre lesquels l'installation d'enroulement (110) est disposée de manière stationnaire.

10. Dispositif (100) selon l'une des revendications précédentes,
**caractérisé en ce que** le pont (120) est réalisé pour guider la bande par-dessus l'installation d'enroulement (100) ; et
**en ce qu'**un aiguillage (123) disposé sur le côté entrée (E) du pont est prévu pour guider alternativement la bande dans l'installation d'enroulement (110) ou par-dessus le pont (120) au-delà de l'installation d'enroulement (110).

11. Dispositif (100) selon la revendication 10,
**caractérisé en ce que** le pont (120) est réalisé sous la forme d'un train de rouleaux avec des rouleaux de train de rouleaux (122) ;
**en ce que** - de préférence - au moins certains des rouleaux de train de rouleaux (122) sont entraînés directement par un moteur électrique ; et
**en ce que -** de préférence - des guides latéraux (124) sont prévus sur les deux côtés du train de rouleaux pour le guidage de la bande.

12. Dispositif (100) selon l'une des revendications précédentes,
**caractérisé en ce que** les dispositifs d'ajustement (116) sont réalisés respectivement sous la forme d'un cylindre hydraulique, d'un actionneur électrique ou pneumatique.

13. Ligne de laminage à chaud (300) avec
une ligne de laminage finisseuse (310) pour le laminage à chaud d'une bande ;
une section de refroidissement (320) disposée en aval de la ligne de laminage finisseuse (310) pour le refroidissement de la bande laminée à chaud ; et
un dispositif (100) selon l'une des revendications précédentes avec l'installation d'enroulement stationnaire (110) dans la ligne de la ligne de laminage finisseuse pour l'enroulement sélectif de la bande laminée à chaud refroidie.

14. Procédé de maintenance de l'installation d'enroulement stationnaire (110) à l'intérieur du dispositif (100) selon l'une des revendications 1 à 12,
**caractérisé par** les étapes suivantes pour le démontage de l'au moins un dispositif d'ajustement (116) en tant que pièce usée :
a) suspension du dispositif d'ajustement (116), de préférence à l'aide du dispositif de levage, au premier dispositif de support (126) ou à un autre chariot (126') à l'intérieur de l'installation d'enroulement (110) ;
b) desserrage du dispositif d'ajustement à l'intérieur de l'installation d'enroulement (110) ; et
c) extraction du dispositif d'ajustement (116) hors de l'installation d'enroulement (110) par déplacement du premier dispositif de support (126) ou de son chariot (126') avec le dispositif d'ajustement (116) suspendu vers le côté opérateur (BS) ou le côté entraînement (AS) de l'installation d'enroulement (110).

15. Procédé de maintenance de l'installation d'enroulement stationnaire (110) à l'intérieur du dispositif (100) selon l'une des revendications 1 à 12,
**caractérisé par** les étapes suivantes pour le montage de l'au moins un dispositif d'ajustement (116) en tant que pièce de rechange :
a) déploiement du premier dispositif de support (126) ou de son chariot (126') vers l'extérieur de l'installation d'enroulement (110) sur son côté opérateur (BS) ou côté entraînement (AS) ;
b) suspension du dispositif d'ajustement (116) au premier dispositif de support (126) ou à son chariot (126'), de préférence à l'aide du dispositif de levage ;
c) déplacement du premier dispositif de support (126) ou de son chariot (126') avec le dispositif d'ajustement (116) suspendu dans l'installation d'enroulement (110) ;
d) fixation du dispositif d'ajustement (116) à l'intérieur de l'installation d'enroulement (110) sur ses points d'articulation ; et
e) détachement du dispositif d'ajustement (116) du premier dispositif de support (126) ou de son chariot (126').

16. Procédé de maintenance de l'installation d'enroulement stationnaire à l'intérieur du dispositif (100) selon l'une des revendications 1 à 12,
**caractérisé par** les étapes suivantes pour le démontage du rouleau presseur (AD1-AD3) et/ou de l'écran de déviation (US1-US3) en tant que pièces usées hors de l'installation d'enroulement (110) :
a) entrée d'un chariot de transport de bobines (130) avec un support (132) vide pour le rouleau presseur (AD1-AD3) et/ou l'écran de déviation (US1-US3) dans l'installation d'enroulement (110) ;
b) suspension du rouleau presseur AD1-AD3 et/ou de l'écran de déviation US1-US3, de préférence à l'aide du dispositif de levage, à un deuxième dispositif de support 128 ;
c) desserrage du rouleau presseur (AD1-AD3) et/ou de l'écran de déviation (US1-US3) de la coquille de déviation (114-1, 114-2, 114-3) ;
d) transport du rouleau presseur (AD1-AD3) et/ou de l'écran de déviation (US1-US3) à l'aide du deuxième dispositif de support (128) et de préférence avec son chariot (128') vers le support (132) ;
e) dépose du rouleau presseur (AD1-AD3) et/ou de l'écran de déviation (US1-US3) sur le support (132) du chariot de transport de bobines (130) et détachement des pièces du dispositif de support 128 ; et
f) sortie du chariot de transport de bobines (130) avec le rouleau presseur (AD1-AD3) et/ou l'écran de déviation (US1-US3) hors de l'installation d'enroulement (110), de préférence sur son côté opérateur.

17. Procédé de maintenance de l'installation d'enroulement stationnaire (110) à l'intérieur du dispositif (100) selon l'une des revendications 1 à 12,
**caractérisé par** les étapes suivantes pour le montage du rouleau presseur (AD1-AD3) et/ou de l'écran de déviation (US1-US3) en tant que pièce de rechange dans l'installation d'enroulement (110) :
a) entrée du chariot de transport de bobines (130) avec le rouleau presseur (AD1-AD3) et/ou l'écran de déviation (US1-US3) dans l'installation d'enroulement (110), typiquement depuis son côté opérateur (BS) ;
b) suspension du rouleau presseur AD1-AD3 et/ou de l'écran de déviation US1-US3, de préférence à l'aide du dispositif de levage, au deuxième dispositif de support ;
c) transport du rouleau presseur (AD1-AD3) et/ou de l'écran de déviation (US1-US3) à l'aide du deuxième dispositif de support (128) et de préférence avec son chariot (128') depuis le chariot de transport de bobines (130) vers leur coquille de déviation respective ;
d) fixation du rouleau presseur (AD1-AD3) et/ou de l'écran de déviation (US1-US3) sur la coquille de déviation (114-1, 114-2, 114-3) à l'intérieur de l'installation d'enroulement (110) ;
e) détachement des pièces du deuxième dispositif de support ; et
f) sortie du chariot de transport de bobines (130) avec le support (132) vidé hors de l'installation d'enroulement (110), typiquement sur son côté opérateur.
